# EUROPÄISCHE PATENTSCHRIFT

(11) **EP 2 350 360 B1**
(45) Veröffentlichungstag und Bekanntmachung des Hinweises auf die Patenterteilung: **05.09.2012**
(21) Anmeldenummer: 09744691.8
(22) Anmeldetag: 04.11.2009
(51) Int. Cl.: D01D 10/02, B29C 55/06, D01D 10/00

(54) **VERFAHREN UND VORRICHTUNG ZUR HERSTELLUNG VON STRANGFÖRMIGEN WAREN**
METHOD AND DEVICE FOR PRODUCING STRAND-SHAPED GOODS
PROCÉDÉ ET DISPOSITIF DE FABRICATION DE PRODUITS EXTRUDÉS

(30) Priorität: 25.11.2008 DE 102008059008
(43) Veröffentlichungstag der Anmeldung: 03.08.2011
(73) Patentinhaber: Oerlikon Textile GmbH & Co. KG, 42897 Remscheid (DE)
(72) Erfinder: WEINHOLD, Jens, 09117 Chemnitz (DE)
(74) Vertreter: Kahlhöfer, Hermann
(86) Internationale Anmeldenummer: PCT/EP2009/064573
(87) Internationale Veröffentlichungsnummer: WO 2010/060760

(56) Entgegenhaltungen:
- EP-A1- 0 687 545
- WO-A1-2006/105079
- DE-A1- 10 241 371
- DE-A1- 19 749 564
- US-A- 5 451 461

## Beschreibung

Die Erfindung betrifft ein Verfahren zur Herstellung von strangförmigen Waren in Form von Bändern, Fasersträngen, Monofilamenten oder Folien gemäß dem Oberbegriff des Anspruchs 1 sowie eine Vorrichtung zur Durchführung des Verfahrens nach dem Oberbegriff des Anspruchs 5.

Ein gattungsgemäßes Verfahren sowie eine gattungsgemäße Vorrichtung sind beispielsweise aus der DE 102 41 371 A1 bekannt.

Bei dem bekannten Verfahren und der bekannten Vorrichtung werden eine Vielzahl von Folienbändchen aus einer extrudierten Folie hergestellt. Die Folie wird aus einer Polymerschmelze extrudiert und in einem Wasserbad abgekühlt. Nach der Abkühlung wird die Folie in eine Vielzahl von Bändchen zerschnitten. Die Folienbändchen werden als Schar gemeinsam durch Walzenlieferwerke abgezogen und zwischen zwei benachbarten Walzenlieferwerken verstreckt. Zur Verstreckung werden die Folienbändchen gemeinsam durch eine Heizeinrichtung geführt, in welcher die Folienbändchen mittels einer Heißluft auf eine Strecktemperatur erwärmt werden. Die an den Folienbändchen durchgeführte thermische Behandlung ist auf das herzustellende Produkt und insbesondere auch auf das thermoplastische Material abgestimmt, aus denen die Folienbändchen gebildet sind.

So ist je nach Material und Beschaffenheit der herzustellenden Waren es ebenfalls üblich, die Wärmebehandlung bei strangförmigen Waren aus thermoplastischem Material durch ein Heißwasserbad auszuführen. Hierzu werden üblicherweise Wasserbadeinrichtungen verwendet, die ein Heißwasser enthalten, durch welches die strangförmigen Bänder oder Folien geführt werden. Insoweit sind im Stand der Technik nur Vorrichtungen bekannt, bei welchen die Heizeinrichtungen entweder eine Heißlufterwärmung oder eine Heißwassererwärmung ermöglichen.

Aus der DE-A1-197 49 564 ist ein Verfahren zur Herstellung einer Borste bekannt, bei dem ein Filamentfaden nach dem Extrudieren abgekühlt, wieder erwärmt und verstreckt wird. Zudem wird der Filamentfaden spannungslos oder zumindest nahezu spannungslos in Heißwasser, Heißluft oder Heißdampf erwärmt.

Es ist daher Aufgabe der Erfindung, ein Verfahren der eingangs genannten Art sowie eine Vorrichtung der beschriebenen Gattung derart weiterzubilden, dass eine thermische Behandlung an den strangförmigen Waren mit maximaler Flexibilität ausführbar ist.

Ein weiteres Ziel der Erfindung ist es, ein Verfahren und eine Vorrichtung der gattungsgemäßen Art bereitzustellen, mit welcher verschiedene thermoplastische Materialien individuell zu strangförmigen Waren hergestellt werden können.

Diese Aufgabe wird erfindungsgemäß für ein Verfahren dadurch gelöst, dass das heiße Medium zur thermischen Behandlung der Waren wahlweise in Form einer Heißluft oder in Form eines Heißwasser bereitgestellt wird. Für eine Vorrichtung ist die Aufgabe dadurch gelöst, dass die Heizeinrichtung durch einen Umluftofen und durch eine Wasserbadeinrichtung gebildet ist, wobei der Umluftofen oder die Wasserbadeinrichtung für eine thermische Behandlung der Waren wahlweise aktivierbar sind.

Vorteilhafte Weiterbildungen der Erfindung sind durch die Merkmale und Merkmalskombinationen der jeweiligen Unteransprüche definiert.

Die Erfindung zeichnet sich dadurch aus, dass bei Großanlagen zur Herstellung von strangförmigen Waren in Form von Bändern, Fasersträngen, Monofilamenten oder Folien ohne jegliche Umrüstungen eine flexible thermische Behandlung der Waren durchgeführt werden kann. Das erfindungsgemäße Verfahren ist somit besonders geeignet, um strangförmige Waren aus unterschiedlichen Polymermaterialien in einer Anlage optimal herstellen zu können.

Die erfindungsgemäße Vorrichtung besitzt zudem den Vorteil, dass ohne jegliche Umrüstung die thermische Behandlung der Waren von einer Heißluftbehandlung auf eine Wasserbehandlung oder umgekehrt umstellbar ist.

Bei der Herstellung von strangförmigen Waren aus einer extrudierten thermoplastischen Polymerschmelze werden die Waren sowohl zum Zwecke einer Verstreckung als auch zum Zwecke einer Relaxationsbehandlung erwärmt. Hierzu wird die Führung der als ein breites Band geführten strangförmigen Waren durch den Ablauf der Waren an einem Walzlieferwerk sowie durch einen Zulauf in einem benachbarten Walzlieferwerk bestimmt. Insoweit ist die Verfahrensvariante besonders vorteilhaft, bei welcher die Waren zur thermischen Behandlung in einer Behandlungsebene geführt werden, die sich zwischen den Walzlieferwerken aufspannt.

Um unabhängig von der durch die Walzlieferwerke bestimmte Behandlungsebene sowohl eine Heißlufterwärmung oder eine Heißwassererwärmung zu ermöglichen, werden die Heißluft durch einen Umluftofen und das Heißwasser durch ein Wasserbad bereitgestellt, die durch eine Höhenverstellung wechselweise in die Behandlungsebene gehalten werden.

Hierzu ist in der Heizeinrichtung ein Umluftofen und eine Wasserbadeinrichtung übereinander angeordnet, wobei die Heizeinrichtung höhenverstellbar ausgebildet ist. Damit lässt sich wahlweise der Umluftofen oder die Wasserbadeinrichtung in die Behandlungsebene positionieren.

Um eine gleichmäßige Erwärmung der strangförmigen Waren während der thermischen Behandlung zu erhalten, wird gemäß einer vorteilhaften Verfahrensvariante die strangförmigen Waren von allen Seiten mit der Heißluft oder mit dem Heißwasser umspült. Insbesondere lassen sich dabei an einer Oberseite und einer Unterseite der strangförmig geführten Waren gleichmäßige Erwärmungen erreichen.

Hierzu ist die erfindungsgemäße Weiterbildung der Vorrichtung bevorzugt verwendet, bei welcher der Umluftofen zumindest zwei Gebläse aufweist, wobei in einer Betriebsstellung des Umluftofens eines der Gebläse oberhalb der Behandlungsebene und das andere Gebläse unterhalb der Behandlungsebene angeordnet ist.

Um eine schnelle Umstellung zwischen einer Heißluftbehandlung und einer Heißwasserbehandlung vornehmen zu können, ist gemäß einer vorteilhaften Weiterbildung der erfindungsgemäßen Vorrichtung die Wasserbadeinrichtung mit einem Behälter ausgeführt, welcher über zumindest eine Leitung mit einer Wasserquelle verbunden ist und welcher zumindest ein Heizmittel aufweist. Somit lässt sich vor Inbetriebnahme der Wasserbadeinrichtung ein Heißwasser erzeugen, durch welches die strangförmigen Waren geführt werden können.

Das erfindungsgemäße Verfahren und die erfindungsgemäße Vorrichtung lässt sich insbesondere mit einer erfindungsgemäßen Heizeinrichtung verwenden, bei welcher ein Umluftofen einen Heißkanal mit einer Einlassöffnung und einer Auslassöffnung zur Führung der strangförmigen Waren enthalten ist. Erfindungsgemäß ist dem Umluftofen eine Wasserbadeinrichtung zugeordnet, die eine zweite Einlassöffnung und eine zweite Auslassöffnung zur Führung strangförmiger Waren aufweist.

Der Umluftofen und die Wasserbadeinrichtung sind übereinander gehalten und gemeinsam höhenverstellbar ausgebildet, so dass je nach Wahl der thermischen Behandlung entweder die Einlassöffnung und Auslassöffnung des Umluftofens in einer Behandlungsebene oder die Einlassöffnung und die Auslassöffnung der Wasserbadeinrichtung der Behandlungsebene gehalten sind.

Hierbei wird bevorzugt die Weiterbildung der Heizeinrichtung verwendet, bei welcher der Umluftofen zumindest zwei Gebläse aufweist, und wobei eines der Gebläse oberhalb des Heizkanals und das andere Gebläse unterhalb des Heizkanals angeordnet sind. Damit wird zu beiden Seiten der als breites Band geführten strangförmigen Waren eine Heißluft erzeugt.

Die Erfindung wird anhand eines Ausführungsbeispiels der erfindungsgemäßen Vorrichtung unter Hinweise auf die beigefügten Zeichnungen nachfolgend näher beschrieben.

Es stellen dar
- Fig. 1: schematisch eine Ansicht eines Ausführungsbeispiels der erfindungsgemäßen Vorrichtung zur Durchführung des erfindungsgemäßen Verfahrens
- Fig. 2: schematisch eine Ausführungsbeispiel der erfindungsgemäßen Heizeinrichtung wie in der erfindungsgemäßen Vorrichtung nach Fig. 1 eingesetzt
- Fig. 3: schematisch eine weiteres Ausführungsbeispiel der erfindungsgemäßen Heizeinrichtung wie in der erfindungsgemäßen Vorrichtung nach Fig. 1 einsetzbar

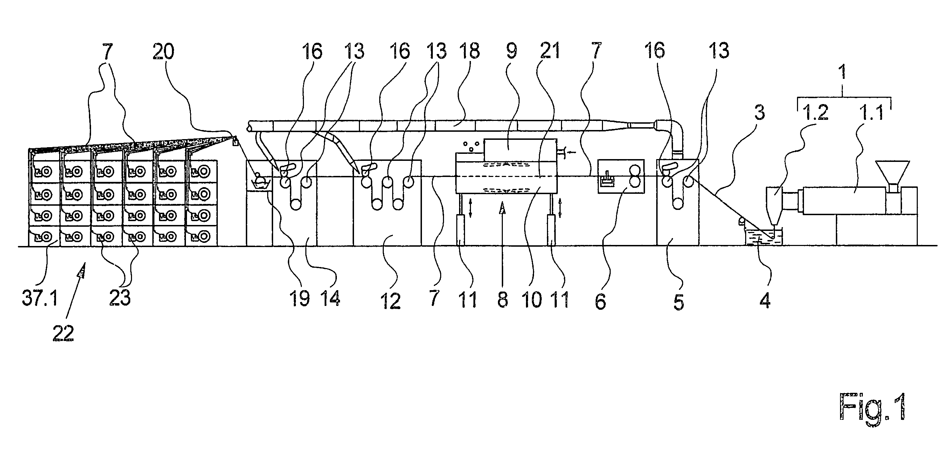

In Fig. 1 ist ein Ausführungsbeispiel einer erfindungsgemäßen Vorrichtung zur Durchführung des erfindungsgemäßen Verfahrens schematisch in einer Ansicht dargestellt. Das Ausführungsbeispiel betrifft eine Anlage zur Herstellung von Folienbändchen aus einer extrudierten Folie.

Hierzu ist eine Spinneinrichtung 1 aus einem Extruder 1.1 und einem Spinnkopf 1.2 gebildet. Der Spinnkopf 1.2 enthält ein Strangpresswerkzeug, um aus einer durch den Extruder 1.1 zugeführten thermoplastischen Schmelze eine Folie zu extrudieren. Hierbei tritt die extrudierte Folie 3 in ein unterhalb des Spinnkopfes 1.2 angeordnetes Kühlbad 4 ein, so dass die Folie 3 an ihrer Oberfläche verfestigt wird. Die Folie 3 wird über ein erstes Walzlieferwerk 5 zu einer Schneideinrichtung 6 geführt. Das erste Walzlieferwerk 5 weist hierzu mehrere angetriebene Walzen 13 auf, an deren Umfang die Folie mit Teilumschlingung geführt ist.

In der Schneideinrichtung 6 treten einzelne Messer in die Folie 3 ein, um die Folienbahn in eine Schar von Folienbändchen 7 zu zerschneiden. Die Folienbändchen 7 werden hierzu durch ein nachgeordnetes zweites Walzlieferwerk 12 von der Schneideinrichtung 6 abgezogen. Das zweite Walzlieferwerk 12 weist ebenfalls mehrere angetriebene Walzen 13 auf, die mit einer höheren Umfangsgeschwindigkeit angetrieben werden als die Walzen des Walzlieferwerkes 5, so dass die Folienbändchen 7 verstreckt werden.

Zur Verstreckung ist zwischen den Walzlieferwerken 5 und 12 eine Heizeinrichtung 8 angeordnet. Die Heizeinrichtung 8 weist einen Umluftofen 10 und eine Wasserbadeinrichtung 9 auf, die innerhalb der Heizeinrichtung 8 übereinander angeordnet sind. Die Heizeinrichtung 8 ist höhenverstellbar ausgebildet, so dass wahlweise der Umluftofen 10 oder die Wasserbadeinrichtung 9 in eine durch die Walzlieferwerke 5 und 12 bestimmte Behandlungsebene 21 positionierbar sind. Bei dem in Fig. 1 dargestellten Ausführungsbeispiel ist der Umluftofen 10 in der Behandlungsebene 21 angeordnet, so dass die Folienbändchen 7 mittels einer Heißluft erwärmt werden.

Dem zweiten Walzlieferwerk 12 ist ein weiteres drittes Walzlieferwerk 14 nachgeordnet, welche die Folienbändchen 7 zu einer Aufwickeleinrichtung 12 führen. Das dritte Walzlieferwerk 14 weist ebenfalls mehrere angetriebene Walzen 13 auf, die von der Bändchenschar umschlungen sind.

Die Walzlieferwerke 5, 12 und 14 weisen jeweils auf der letzten Walze 13 eine schwenkbar gelagerte Anpresswalze 16 auf, durch deren Normalkraft die Folie bzw. die Folienbändchen 7 an den jeweiligen Walzen angedrückt und in Verbindung mit der Umschlingung die Halte- und Streckkräfte festgelegt sind. An dem zweiten Walzlieferwerk 12 und dem dritten Walzlieferwerk 14 ist eine Absaugeinrichtung 18 angeschlossen, von welcher die Folienbändchen bei der Inbetriebnahme der Anlage, d.h. während des Anlegens der einzelnen Folienbändchen, zunächst abgesaugt werden. Hierdurch werden auch die während des Betriebes abgerissenen Bändchen abgesaugt, damit sich an den Walzen keine Wickler bilden können.

Am Ende der erfindungsgemäßen Vorrichtung ist eine Aufwickeleinrichtung 22 angeordnet. Zwischen der Aufwickeleinrichtung 22 und dem letzten Walzlieferwerk 14 ist eine Präparationseinrichtung 19 vorgesehen, durch welche die Folienbändchen vor dem Aufwickeln zu Spulen mit einem Präparationsmittel benetzt werden.

Die Aufwickeleinrichtung 22 weist ein Maschinengestell auf, in welchem eine Vielzahl von Wickelstellen 23 übereinander und nebeneinander angeordnet sind. In jeder der Wickelstelle wird eines der Folienbändchen zu einer Spule gewickelt. Die Verteilung der Folienbändchen 7 auf die Wickelstellen 23 erfolgt durch eine Fadenführerleiste 20 und den den Wickelstellen 23 zugeordneten Fadenführern.

Die zur Behandlung und Führung der Folienbändchen 7 in dem Ausführungsbeispiel nach Fig. 1 gezeigten Einrichtungen sind nur beispielhaft. Grundsätzlich können noch zusätzliche Behandlungsschritte und Behandlungseinrichtungen vorgesehen sein, um je nach Material und je nach Bändchentyp zusätzliche Behandlungsschritte durchführen zu können. So ist es beispielsweise üblich, zwischen dem zweiten Walzenlieferwerk 12 und dem letzten Walzenlieferwerk 14 eine Relaxationsbehandlung auszuführen. Dabei werden die Folienbändchen 7 üblicherweise erwärmt, so dass zwischen den beiden Walzlieferwerken 12 und 14 eine weitere Heizeinrichtung angeordnet sein könnte. So ließe sich beispielsweise die Heizeinrichtung 8 ohne Probleme auch zur thermischen Behandlung in der Relaxationszone einsetzen.

Um die thermische Behandlung wahlweise mit einer Heißluft oder mit einem Heißwasser ausführen zu können, ist die Heizeinrichtung 8 durch einen Umluftofen 10 und eine Wasserbadeinrichtung 9 gebildet.

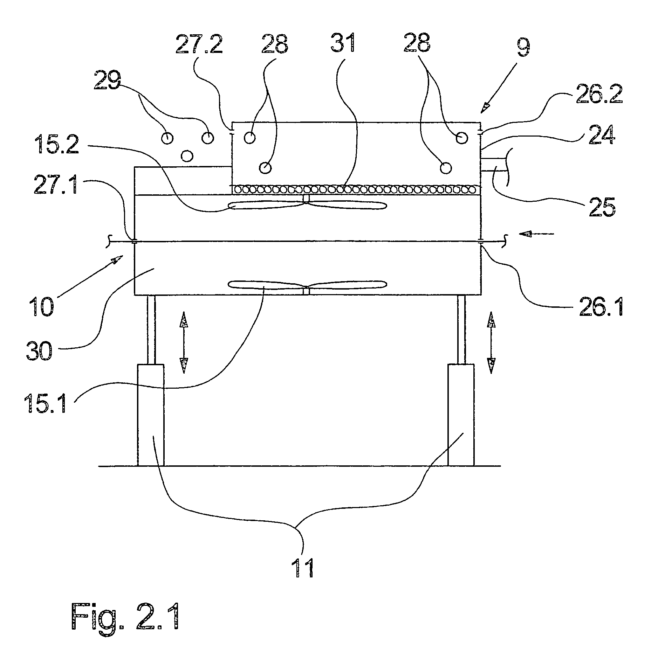

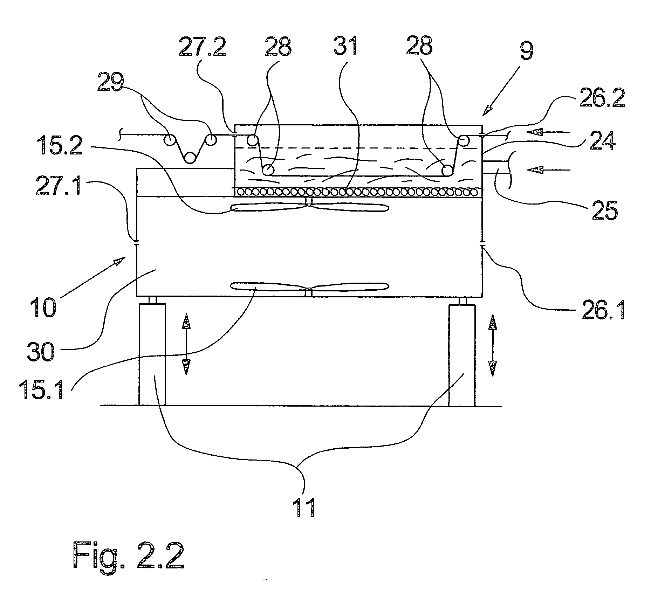

In der Fig. 2 ist ein Ausführungsbeispiel einer derartigen erfindungsgemäßen Heizeinrichtung schematisch in einer Querschnittsansicht gezeigt. In der Fig. 2.1 ist die Heizeinrichtung in einer ersten Betriebsstellung gezeigt, in welcher die Folienbändchen mittels einer Heißluft erwärmt werden. In der Fig. 2.2 ist die Heizeinrichtung in einer zweiten Betriebsstellung dargestellt, in welcher die Folienbändchen 7 durch ein Heißwasser erwärmt werden. Insoweit gilt die nachfolgende Beschreibung der Heizeinrichtung für beide Figuren.

Die Heizeinrichtung wird in diesem Ausführungsbeispiel durch einen Umluftofen 10 und eine Wasserbadeinrichtung 9 gebildet, die übereinander angeordnet sind. So ist die Wasserbadeinrichtung 9 unmittelbar oberhalb des Umluftofens 10 angeordnet. Dem Umluftofen 10 und der Wasserbadeinrichtung 9 ist eine Höhenverstelleinrichtung 11 zugeordnet, die in diesem Ausführungsbeispiel durch mehrere Hubzylinder gebildet sind.

Der Umluftofen 10 weist einen länglichen Heizkanal 30 auf, der sich zwischen einer Einlassöffnung 26.1 und einer Auslassöffnung 27.1 erstreckt. Die Einlassöffnung 26.1 ist an einer Stirnseite des Umluftofens 10 schlitzförmig ausgebildet, um beispielsweise eine Schar von Bändern in einer Behandlungsebene führen zu können. Auf der gegenüberliegenden Stirnseite des Umluftofens 10 ist die Auslassöffnung 27.1 korrespondierend ausgebildet. Innerhalb des Umluftofens 10 sind zwei Gebläse 15.1 und 15.2 vorgesehen, um die innerhalb des Ofens erzeugte Heißluft gleichmäßig zu verteilen. Das Gebläse 15.1 ist oberhalb des Heizkanales 30 und das Gebläse 15.2 unterhalb des Heizkanals 30 angeordnet. Damit lassen sich die strangförmigen Waren innerhalb des Umluftofens 10 von einer Oberseite und einer Unterseite her gleichmäßig erwärmen.

Die Wasserbadeinrichtung 9 ist in diesem Ausführungsbeispiel durch einen Behälter 24 gebildet, der zumindest einen Wasseranschluss 25 aufweist. Über den Wasseranschluss 25 ist eine Anbindung an eine hier nicht dargestellte Wasserquelle möglich, so dass in dem Behälter 24 ein Frischwasser eingeleitet werden kann. Innerhalb des Behälters 24 ist ein Heizmittel 31 vorgesehen, um das in dem Behälter 24 eingeleitete Frischwasser zu erwärmen. Im oberen Bereich des Behälters 24 ist an einer Stirnseite eine Einlassöffnung 26.2 und auf der gegenüberliegenden Seite eine Auslassöffnung 27.2 ausgebildet. Innerhalb des Behälters 24 sind der Einlassöffnung 26.2 und der Auslassöffnung 27.2 mehrere Umlenkrollen 28 zugeordnet, um beispielsweise eine Schar von Bändchen oder eine Folie zur thermischen Behandlung durch das Heißwasser des Behälters 24 zu führen.

Auf einer Auslassseite des Behälters 24 sind mehrere Abstreifrollen 29 vorgesehen, um das an den Bändchen oder der Folie anhaftende Wasser abzustreifen.

In der Fig. 2.1 ist die Heizeinrichtung in einer ersten Betriebsstellung mit aktiviertem Umluftofen 10 gezeigt, in welcher die strangförmigen Waren über die erste Einlassöffnung 26.1 ins Innere des Umluftofens 10 geführt werden. Der Umluftofen 10 ist über die Höhenverstelleinrichtung 11 derart positioniert, dass die Einlassöffnung 26.1 und die Auslassöffnung 27.1 in einer Behandlungsebene liegen. Diese Situation ist beispielsweise auch in dem Ausführungsbeispiel der erfindungsgemäßen Vorrichtung nach Fig. 1 gezeigt. In dieser Betriebsstellung wird das strangförmige Material durch eine Heißluft erwärmt. Je nach Behandlungsart, ob eine Verstreckung oder eine Relaxation erforderlich ist, lässt sich die Temperatur des Umluftofens 10 einstellen. Die Wasserbadeinrichtung 9 ist in dieser Betriebsstellung deaktiviert, so dass kein Wasser vorgehalten wird.

In Fig. 2.2 ist die Heizeinrichtung in einer zweiten Betriebsstellung mit aktivierter Wasserbadeinrichtung 9 gezeigt, in welcher die Wasserbadeinrichtung 9 mit ihrer Einlassöffnung 26.2 und ihrer Auslassöffnung 27.2 in der Behandlungsebene angeordnet sind, um die zugeführten strangförmigen Waren mit einem Heißwasser zu erwärmen. Hierzu ist in dem Behälter 24 ein Wasser eingeleitet und über das Heizmittel 31 auf eine vorbestimmte Temperatur erhitzt. In dieser Situation ist der Umluftofen 10 deaktiviert. Die thermische Behandlung erfolgt ausschließlich durch die Wasserbadeinrichtung 9.

Die in Fig. 2 dargestellte Heizeinrichtung ist somit besonders geeignet, um die thermische Behandlung wahlweise mit einer Heißluft oder einem Heißwasser in dem in Fig. 1 dargestellten Ausführungsbeispiel durchzuführen.

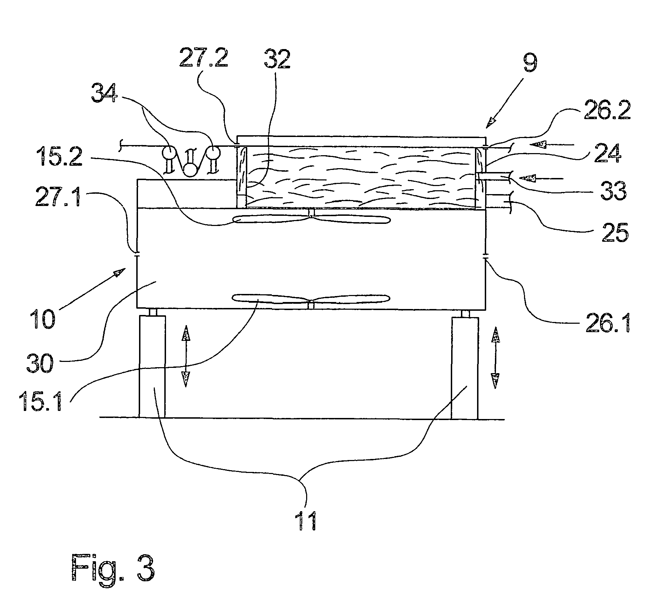

In Fig. 3 ist ein weiteres Ausführungsbeispiel einer Heizeinrichtung 8 gezeigt, wie sie in dem Ausführungsbeispiel der erfindungsgemäßen Vorrichtung nach Fig. 1 eingesetzt werden könnte. Das Ausführungsbeispiel der Heizeinrichtung nach Fig. 3 ist im Wesentlichen identisch zu dem Ausführungsbeispiel der Heizeinrichtung nach Fig. 2. Daher wird an dieser Stelle nur der Unterschied zwischen den beiden Ausführungsbeispielen erläutert und ansonsten Bezug zu der vorgenannten Beschreibung genommen.

Das Ausführungsbeispiel der Heizeinrichtung wird durch eine Wasserbadeinrichtung 9 und einen Umluftofen 10 gebildet. Beide Einrichtungen lassen sich durch eine Höhenverstelleinrichtung 11 wahlweise in den Fadenlauf halten. In Fig. 3 ist die Situation gezeigt, bei welcher die Folienbändchen 7 durch die Wasserbadeinrichtung 9 erwärmt werden.

Die Wasserbadeinrichtung 9 weist hierzu einen Überlaufbehälter 32 auf, der mit seiner oberen Öffnung eine Behandlungsebene bildet, in welcher die Folienbändchen 7 geführt sind. Der Überlaufbehälter 32 ist innerhalb des Behälters 24 angeordnet, so dass ein ständig aus dem Überlaufbehälter 32 austretendes Heißwasser in dem Behälter 24 gesammelt wird. Der Überlaufbehälter 32 und der Behälter 24 sind in einem Kreislauf zur Führung und Aufbereitung eines Heißwassers verbunden. So wird der Überlaufbehälter 32 durch einen Wasserzulauf 33 mit Heißwasser gespeist. Der Behälter 24 ist über den Wasseranschluss 25 mit einer hier nicht dargestellten Rücklaufleitung verbunden.

Zur Führung der Folienbändchen weist der Behälter 24 an gegenüberliegenden Seiten eine Einlassöffnung 26.2 und eine Auslassöffnung 27.2 auf, die mit dem Rand des Überlaufbehälters 32 die Behandlungsebene bilden. Die Folienbändchen 7 werden durch die natürliche Überhöhung des Wasserspiegels geführt, der sich in dem Überlaufbehälter 32 bei Überfüllung zwangsläufig einstellt. So lassen sich die Folienbändchen in einem geraden Fadenlauf durch das Wasserbad führen.

Auf der Auslassseite der Wasserbadeinrichtung 9 sind mehrere Absaugstutzen 34 vorgesehen, an denen die Folienbändchen 7 mit Kontakt geführt werden. Die Absaugstutzen 34 weisen schlitzförmige Öffnungen auf, um die anhaftende Flüssigkeit von den Folienbändchen abzusaugen. Hierzu sind die Absaugstutzen 34 mit einer Absaugeinrichtung verbunden.

Bei den in Fig. 2 und 3 dargestellten Heizeinrichtungen wiesen die Wasserbadeinrichtung und der Umluftofen aufgrund der unterschiedlichen Wärmeübertragungen unterschiedlich lang ausgeprägte Heißstrecken auf. So ist die Behandlungstrecke bei der Wasserbadeinrichtung aufgrund besserer Wärmeübertragung wesentlich kürzer ausgebildet als bei dem Umluftofen. Beide Ausführungsbeispiele sind somit zur Wärmebehandlung in der erfindungsgemäßen Vorrichtung geeignet.

Das in Fig. 1 dargestellten Ausführungsbeispiel der erfindungsgemäßen Vorrichtung lässt sich vorteilhaft auch dazu nutzen, um eine Vielzahl von Monofilamenten herzustellen. Hierzu enthält der Spinnkopf 1.2 eine Spinndüse mit einer Mehrzahl von Düsenöffnungen, so dass bereits einzelne Monofilamente extrudiert werden können.

Es ist ebenfalls möglich, dass innerhalb der Vorrichtung die extrudierte Folie nicht zu Bändchen zerschnitten wird, sondern als Flachfolie hergestellt und aufgewickelt wird. Insoweit erstreckt sich die Erfindung auf alle Einrichtungen, die eine strangförmige Ware aus einem extrudierten thermoplastischen Material herstellen und die zwischen Walzlieferwerken eine thermische Behandlung an den strangförmigen Waren ausführen.

### Bezugszeichenliste

- 1: Spinneinrichtung
- 1.1: Extruder
- 1.2: Spinnkopf
- 3: Folie
- 4: Kühlbad
- 5: Walzlieferwerk
- 6: Schneideinrichtung
- 7: Folienbändchen
- 8: Heizeinrichtung
- 9: Wasserbadeinrichtung
- 10: Umluftofen
- 11: Höhenverstelleinrichtung
- 12: Walzlieferwerk
- 13: Walze
- 14: Walzlieferwerk
- 15.1, 15.2: Gebläse
- 16: Anpresswalze
- 17: Umlenkwalze
- 18: Absaugeinrichtung
- 19: Präparationseinrichtung
- 20: Fadenführerleiste
- 21: Behandlungsebene
- 22: Aufwickeleinrichtung
- 23: Wickelstelle
- 24: Behälter
- 25: Wasseranschluss
- 26.1, 26.2: Einlassöffnung
- 27.1,27.2: Auslassöffnung
- 28: Umlenkrollen
- 29: Abstreifrollen
- 30: Heizkanal
- 31: Heizmittel
- 32: Überlaufbehälter
- 33: Wasserzulauf
- 34: Absaugstutzen

## Patentansprüche

1. Verfahren zur Herstellung von strangförmigen Waren in Form von Bändern, Fasersträngen, Monofilamenten oder Folien, die aus einer Polymerschmelze extrudiert werden, in einem Wasserbad abgekühlt und zwischen Walzlieferwerken thermisch behandelt werden, wobei die Waren zur thermischen Behandlung mit einem heißen Medium in Kontakt gebracht werden,
**dadurch gekennzeichnet, dass**
das heiße Medium zur thermischen Behandlung der Waren wahlweise in Form einer Heißluft oder in Form eines Heißwassers bereitgestellt wird, wobei die Waren zur thermischen Behandlung in einer Behandlungsebene geführt werden, die sich zwischen den Walzlieferwerken aufspannt und wobei die Heißluft durch einen Umluftofen und das Heißwasser durch ein Wasserbad bereitgestellt wird, die durch eine Höhenverstellung wechselweise in die Behandlungsebene gehalten werden.

2. Verfahren nach Anspruch 1,
**dadurch gekennzeichnet, dass**
während der thermischen Behandlung die Waren von allen Seiten mit der Heißluft oder dem Heißwasser umspült sind.

3. Vorrichtung zur Durchführung des Verfahrens nach einem der Ansprüche 1 bis 2, mit einer Schmelzspinneinrichtung (1), mit einer Kühleinrichtung (4), mit mehreren Walzlieferwerken (5, 12) und mit einer Heizeinrichtung (8) zwischen den Walzlieferwerken (5, 12),
**dadurch gekennzeichnet, dass**
die Heizeinrichtung (8) durch einen Umluftofen (10) und durch eine Wasserbadeinrichtung (9) gebildet ist, wobei der Umluftofen (10) oder die Wasserbadeinrichtung (9) für eine thermische Behandlung der Waren wahlweise aktivierbar sind.

4. Vorrichtung nach Anspruch 3,
**dadurch gekennzeichnet, dass**
der Umluftofen (10) oder die Wasserbadeinrichtung (9) wahlweise in eine zwischen den Walzlieferwerken (5, 12) aufgespannt Behandlungsebene (21) positionierbar sind.

5. Vorrichtung nach Anspruch 4,
**dadurch gekennzeichnet, dass**
der Umluftofen (10) und die Wasserbadeinrichtung (9) in der Heizeinrichtung (8) übereinander angeordnet sind und dass die Heizeinrichtung (8) höhenverstellbar ausgebildet ist.

6. Vorrichtung nach einem der Ansprüche 3 bis 5,
**dadurch gekennzeichnet, dass**
der Umluftofen (10) zumindest zwei Gebläse (15.1, 15.2) aufweist, wobei in einer Betriebsstellung des Umluftofen (10) eines der Gebläse (15.1) oberhalb der Behandlungsebene (21) und das andere Gebläse (15.2) unterhalb der Behandlungsebene (21) angeordnet ist.

7. Vorrichtung nach einem der Ansprüche 3 bis 6,
**dadurch gekennzeichnet, dass**
die Wasserbadeinrichtung (9) einen Behälter (24) aufweist, welcher über zumindest einen Wasseranschluss (25) mit einer Wasserquelle verbunden ist und welcher zumindest ein Heizmittel (31) aufweist.

8. Heizeinrichtung zur Verwendung in einer Vorrichtung nach einem der Ansprüche 3 bis 7, mit einem Umluftofen (10), der einen Heizkanal (30) mit einer Einlassöffnung (26.1) und einer Auslassöffnung (27.1) zur Führung strangförmiger Waren aufweist,
**dadurch gekennzeichnet, dass**
eine dem Umluftofen (10) zugeordnete Wasserbadeinrichtung (9) vorgesehen ist, die eine zweite Einlassöffnung (26.2) und eine zweite Auslassöffnung (27.2) zur Führung strangförmiger Waren aufweist.

9. Heizeinrichtung nach Anspruch 8,
**dadurch gekennzeichnet, dass**
der Umluftofen (10) und die Wasserbadeinrichtung (9) übereinander gehalten und gemeinsam höhenverstellbar ausgebildet sind.

10. Heizeinrichtung nach Anspruch 8 oder 9,
**dadurch gekennzeichnet, dass**
der Umluftofen (10) zumindest zwei Gebläse (15.1, 15.2) aufweist, wobei eines der Gebläse (15.1) oberhalb des Heizkanals (30) und das andere Gebläse (15.2) unterhalb des Heizkanals (30) angeordnet ist.

11. Heizeinrichtung nach einem der Ansprüche 8 bis 10,
**dadurch gekennzeichnet, dass**
die Wasserbadeinrichtung (9) einen Behälter (24) aufweist, welcher zumindest einen Wasseranschluss (25) und zumindest ein Heizmittel (31) aufweist.

## Claims

1. Method for production of strand-like goods in the form of strips, fiber strands, monofilaments or films, which are extruded from a polymer melt, cooled in a water bath and heat treated between roll delivery systems, in which the goods are brought into contact for heat treatment with a hot medium,
**characterized by** the fact that
the hot medium for heat treatment is furnished to the goods alternately in the form of hot air or in the form of hot water, wherein the goods are passed for heat treatment in a treatment plane that extends between the roll delivery systems and wherein the hot air is furnished by a forced air oven and the hot water by a water bath, which are kept alternately in the treatment plane by a height adjustment.

2. Method according to Claims 1,
**characterized by** the fact that
during heat treatment the goods are exposed to hot air or hot water on all sides.

3. Device for execution of the method according to one of the Claims 1 to 2 with a melt spinning device (1), with a cooling device (4), with several roll
delivery systems (5, 12) and with a heating device (8) between the roll delivery systems (5, 12),
**characterized by** the fact that
the heating device (8) is formed by a forced air oven (10) and the water bath device (9), in which the forced air oven (10) or the water bath device (9) can be activated in alternation for heat treatment of the goods.

4. Device according to Claim 3,
**characterized by** the fact that
the forced air oven (10) or the water bath device (9) can alternately be positioned in a treatment plane (21) extending between roll delivery systems (5, 12).

5. Device according to Claim 4,
**characterized by** the fact that
the forced air oven (10) and the water bath device (9) are arranged one above the other in heating device (8) and that the heating device (8) is designed height-adjustable.

6. Device according to one of the Claims 3 to 5,
**characterized by** the fact that
forced air oven (10) has at least two fans (15.1, 15.2), in which one of the fans (15.1) is arranged above the treatment plane (21) in one treatment position of the forced air oven (10) and the other fan (15.2) is arranged beneath the treatment plane (21).

7. Device according to one of the Claims 3 to 6,
**characterized by** the fact that
the water bath device (9) has a container (24), which his connected to a water source via at least one water connection (25) and which has at least one heating device (31).

8. Heating device for use in a device according to one of the Claims 3 to 7 with a forced air oven (10), which has a heating channel (30) with an inlet opening (26.1) and an outlet opening (27.1) for guiding of strand-like goods,
**characterized by** the fact that
a water bath device (9) assigned to the forced air oven (10) has provided, which has a second inlet opening (26.2) and a second outlet opening (27.2) for guiding of strand-like goods.

9. Heating device according to Claim 8,
**characterized by** the fact that
forced air oven (10) and the water bath device (9) are held one above the other and designed height-adjustable together.

10. Heating device according to Claim 8 or 9,
**characterized by** the fact that
forced air oven (10) has at least two fans (15.1, 15.2), one of the fans (15.1) being arranged above the heating channel (30) and the other fan (15.2) being arranged beneath the heating channel (30).

11. Heating device according to one of the Claims 8 to 10,
**characterized by** the fact that
water bath device (9) has a container (24), which has at least one water connection (25) and at least one heating device (31).

## Revendications

1. Procédé de fabrication de produits en forme de bandes, de torons de filaments, de monofilaments ou de feuilles, qui sont extrudés d'une fonte de polymères, refroidis dans un bain-marie et traités thermiquement entre des dispositifs d'alimentation cylindriques, pour le traitement thermique les produits étant mis en contact avec un médium chaud, **caractérisé en ce que** pour le traitement thermique des produits le médium chaud est mis à disposition au choix en forme d'un air chaud ou d'une eau chaude, pour le traitement thermique les produits étant guidés dans un plan de traitement qui s'étend entre les dispositifs d'alimentation cylindriques et l'air chaud étant mis à disposition par une étuve à circulation d'air et l'eau chaude par un bain-marie, lesquelles étant maintenues réciproquement dans le plan de traitement par un déplacement en hauteur.

2. Procédé selon la revendication 1, **caractérisé en ce que** durant le traitement thermique les produits sont baignés de tous les cotés dans l'air chaud ou dans l'eau chaude.

3. Dispositif pour la mise en oeuvre du procédé selon l'une des revendications 1 à 2 avec une installation de filage à l'état fondu (1), avec une installation de refroidissement (4), avec une pluralité de dispositifs d'alimentation cylindriques (5, 12) et avec une installation de chauffage (8) entre les dispositifs d'alimentation cylindriques (5, 12), **caractérisé en ce que** l'installation de chauffage (8) est formée par une étuve à circulation d'air (10) et par un bain-marie (9), l'étuve à circulation d'air (10) ou l'installation de bain-marie (9) étant activables au choix pour un traitement thermique des produits.

4. Dispositif selon la revendication 3, **caractérisé en ce que** l'étuve à circulation d'air (10) ou l'installation de bain-marie (9) peuvent être positionnées aux choix dans un plan de traitement (21) formé entre les dispositifs d'alimentation cylindriques (5, 12).

5. Dispositif selon la revendication 4, **caractérisé en ce que** l'étuve à circulation d'air (10) et l'installation de bain-marie (9) sont agencées l'une au dessus de l'autre dans l'installation de chauffage (8) et **en ce que** l'installation de chauffage (8) est réalisée de manière à pouvoir être déplacée en hauteur.

6. Dispositif selon l'une des revendications 3 à 5, **caractérisé en ce que** l'étuve à circulation d'air (10) a au moins deux soufflantes (15.1, 15.2), dans une position de marche de l'étuve à circulation d'air (10) une des soufflantes (15.1) étant agencée au dessus du plan de traitement (21) et l'autre soufflante (15.2) en dessous du plan de traitement (21).

7. Dispositif selon l'une des revendications 3 à 6, **caractérisé en ce que** l'installation de bain-marie (9) est pourvue d'un réservoir (24) qui par au moins un raccordement d'eau (25) est relié à une source d'eau et qui a au moins un moyen de chauffage (31).

8. Installation de chauffage pour l'utilisation dans un dispositif selon l'une des revendications 3 à 7, avec une étuve à circulation d'air (10), qui est dotée d'un canal de chauffage (30) avec une ouverture d'entrée (26.1) et une ouverture de sortie (27.1) pour guider des produits en forme de torons, **caractérisée en ce qu'**une installation de bain-marie (9) associée à l'étuve à circulation d'air (10), qui a une deuxième ouverture d'entrée (26.2) et une deuxième ouverture de sortie (27.2) pour guider des produits en forme de torons.

9. Installation de chauffage selon la revendication 8, **caractérisée en ce que** l'étuve à circulation en air (10) et l'installation de bain-marie (9) sont maintenues l'une au dessus de l'autre et sont réalisées de manière à être déplacées communément en hauteur.

10. Installation de chauffage selon les revendications 8 ou 9, **caractérisée en ce que** l'étuve à circulation d'air (10) a au moins deux soufflantes (15.1, 15.2), une des soufflantes (15.1) étant agencée au dessus du canal de chauffage (30) et l'autre soufflante (15.2) en dessous du canal de chauffage (30).

11. Installation de chauffage selon l'une des revendications 8 à 10, **caractérisée en ce que** l'installation du bain-marie (9) a un réservoir (24), qui a au moins un raccordement d'eau (25) et au moins un moyen de chauffage (31).
